# EUROPÄISCHE PATENTSCHRIFT

(11) **EP 2 183 320 B1**
(45) Veröffentlichungstag und Bekanntmachung des Hinweises auf die Patenterteilung: **29.12.2010**
(21) Anmeldenummer: 08787169.5
(22) Anmeldetag: 13.08.2008
(51) Int. Cl.: C08L 77/02, C08L 77/04, C08L 77/06, C08J 5/12, B29C 65/00

(54) **Fügen von Formteilen aus unterschiedlichen Polyamidformmassen**
Joining of molded parts made of different polyamide molding compounds
Assemblage de pièces moulées constituées de différentes matières moulables polyamides

(30) Priorität: 31.08.2007 DE 102007041488
(43) Veröffentlichungstag der Anmeldung: 12.05.2010
(73) Patentinhaber: Evonik Degussa GmbH, 45128 Essen (DE)
(72) Erfinder: BOLLMANN, Sonja, 45721 Haltern am See (DE); GÖRING, Rainer, 46325 Borken (DE); BAUMANN, Franz-Erich, 48249 Dülmen (DE); DOWE, Andreas, 46325 Borken (DE); SCHIEMANN, Vera, 45772 Marl (DE)
(86) Internationale Anmeldenummer: PCT/EP2008/060618
(87) Internationale Veröffentlichungsnummer: WO 2009/027231

(56) Entgegenhaltungen:
- EP-A1- 1 403 030
- EP-A2- 1 195 419
- DE-A1- 2 147 420

## Beschreibung

Die Erfindung betrifft ein Verfahren zum Verbinden zweier Formteile, von denen das eine aus einer PA11-Formmasse und das andere aus einer PA12-Formmasse besteht. Die beiden Formteile sind beispielsweise Ver- oder Entsorgungsleitungen aus Polyamid.

Rohre mit erhöhten technischen Anforderungen zum Transport beispielsweise von Gasen, Ölen oder Salzen werden derzeit in erster Linie aus PA11 hergestellt. Hierbei handelt es sich etwa um Gasleitungssysteme, Industrieleitungen (z. B. für chemikalienhaltiges Abwasser) und Ölförderleitungen (off-shore-Leitungen). Müssen diese Rohre nach einer Beschädigung repariert oder ausgetauscht werden oder wird das Versorgungsnetz durch neue Teilabschnitte erweitert, so werden die Enden oder Übergänge geschweißt. Dazu können die Kunststoffformteile mit den unterschiedlichsten Kunststoffschweißverfahren verbunden werden; insbesondere großvolumige Rohre werden vornehmlich mittels Heizelement-, Heizelementmuffen- oder Heizwendelschweißen verbunden.

Nachdem seit kurzem neue Verarbeitungstechniken zur Verfügung gestellt wurden, werden für die genannten Anwendungszwecke zunehmend PA12-Formmassen eingesetzt werden, da dieses Material für derartige Anwendungen hervorragend geeignet ist. Dabei ist davon auszugehen, dass bereits bestehende Versorgungsnetze erweitert oder repariert werden müssen. Bestehen diese bereits aus PA11, so wäre eine Erweiterung mit Teilen, die aus PA12 bestehen, über sogenannte Fittinge bestehend aus PA11 oder PA12 erschwert, da sich Teile aus PA11 und PA12 im Schweißverfahren nur mit nicht ausreichender Festigkeit verbinden lassen. Sollen nun Rohre aus Polyamid neu verbunden, repariert oder saniert werden, so ist dies nur unter Beachtung des Polyamidtyps durchführbar. Dies heißt, dass PA11 nur mit PA11 und PA12 nur mit PA12 zu verlegen ist. Diese Umstände setzen voraus, dass an der Baustelle diese Voraussetzungen bekannt sind und gewissenhaft beachtet werden. Die Gefahr der Materialverwechslung ist daher ernst zu nehmen. Neben der Verwechslungsgefahr des Materials resultiert zusätzlich ein erhöhter logistischer Bevorratungsaufwand, da nun Verbindungsstücke aus PA11 und zusätzlich aus PA12 gelagert werden müssen.

Bekannt ist, dass Formkörper aus Polyamiden (z. B. Rohranbindungselement) und Formkörper aus Polyethylen (z. B. Kraftstofftank) oder Polypropylen über Polyolefine miteinander verbunden werden, die mit Maleinsäureanhydrid gepfropft sind (DE 195 35 413 C1) und die sowohl auf PA 11 als auch auf PA12 fest haften. Bei Übergängen von Polyamid zu Polyamid kann eine derartige Verbindung keine Rolle spielen, da Polyamide ihre Anwendung in erster Linie in höheren Druckbereichen finden, in denen Verbindungselemente aus funktionalisierten Polyolefinen aufgrund nicht ausreichender mechanischer Eigenschaften nicht eingesetzt werden können.

Es besteht daher die Aufgabe, eine Formmasse zur Verfügung zu stellen, die zum Fügen sowohl von PA11-Formteilen als auch von PA12-Formteilen geeignet ist.

Diese Aufgabe wurde gelöst durch die Verwendung einer Formmasse zum Fügen zweier Formteile aus jeweils einer PA11- und einer PA12-Formmasse, wobei die Formmasse zu mindestens 50 Gew.-%, bevorzugt mindestens 60 Gew.-%, besonders bevorzugt mindestens 70 Gew.-%, insbesondere bevorzugt mindestens 80 Gew.-% und ganz besonders bevorzugt mindestens 90 Gew.-% eine Polyamidkomponente enthält, die so gewählt wird, dass sie herstellbar ist aus linearen aliphatischen Diaminen und Dicarbonsäuren bzw. Lactamen oder ω-Aminocarbonsäuren, wobei gleichzeitig in den wiederkehrenden Einheiten pro Carbonamidgruppe 11 bis 12 Kohlenstoffatome vorhanden sind und wobei weiterhin die Voraussetzung erfüllt sein muss, dass diese Polyamidkomponente maximal zu 80 Gew.-%, bevorzugt maximal zu 75 Gew.-%, besonders bevorzugt maximal zu 70 Gew.-% und insbesondere bevorzugt maximal zu 65 Gew.-% jeweils eines der Polyamide PA11 und PA12 enthält. Vorzugsweise ist die Polyamidkomponente ausgewählt aus PA 1012, PA 1210, PA 1212, PA814, PA1014, PA618, PA11 und PA12.

In einer ersten bevorzugten Ausführungsform enthält die Formmasse als Polyamide PA1012 und PA11 im Gewichtsverhältnis 100 : 0 bis 20 : 80, bevorzugt 100 : 0 bis 25 : 75, besonders bevorzugt 100 : 0 bis 30 : 70 und insbesondere bevorzugt 99,9 : 0,1 bis 35 : 65.

In einer zweiten bevorzugten Ausführungsform enthält die Formmasse als Polyamide PA1012 und PA12 im Gewichtsverhältnis 100 : 0 bis 20 : 80, bevorzugt 100 : 0 bis 25 : 75, besonders bevorzugt 100 : 0 bis 30 : 70 und insbesondere bevorzugt 99,9 : 0,1 bis 35 : 65.

In einer dritten bevorzugten Ausführungsform enthält die Formmasse als Polyamide PA1212 und PA11 im Gewichtsverhältnis 100 : 0 bis 20 : 80, bevorzugt 100 : 0 bis 25 : 75, besonders bevorzugt 100 : 0 bis 30 : 70 und insbesondere bevorzugt 99,9 : 0,1 bis 35 : 65.

In einer vierten bevorzugten Ausführungsform enthält die Formmasse als Polyamide PA1212 und PA12 im Gewichtsverhältnis 100 : 0 bis 20 : 80, bevorzugt 100 : 0 bis 25 : 75, besonders bevorzugt 100 : 0 bis 30 : 70 und insbesondere bevorzugt 99,9 : 0,1 bis 35 : 65.

In einer fünften bevorzugten Ausführungsform enthält die Formmasse als Polyamide PA1210 und PA11 im Gewichtsverhältnis 100 : 0 bis 20 : 80, bevorzugt 100 : 0 bis 25 : 75, besonders bevorzugt 100 : 0 bis 30 : 70 und insbesondere bevorzugt 99,9 : 0,1 bis 35 : 65.

In einer sechsten bevorzugten Ausführungsform enthält die Formmasse als Polyamide PA1210 und PA12 im Gewichtsverhältnis 100 : 0 bis 20 : 80, bevorzugt 100 : 0 bis 25 : 75, besonders bevorzugt 100 : 0 bis 30 : 70 und insbesondere bevorzugt 99,9 : 0,1 bis 35 : 65.

In einer siebten bevorzugten Ausführungsform enthält die Formmasse als Polyamide PA618 und PA11 im Gewichtsverhältnis 100 : 0 bis 20 : 80, bevorzugt 100 : 0 bis 25 : 75, besonders bevorzugt 100 : 0 bis 30 : 70 und insbesondere bevorzugt 99,9 : 0,1 bis 35 : 65.

In einer achten bevorzugten Ausführungsform enthält die Formmasse als Polyamide PA814 und PA11 im Gewichtsverhältnis 100 : 0 bis 20 : 80, bevorzugt 100 : 0 bis 25 : 75, besonders bevorzugt 100 : 0 bis 30 : 70 und insbesondere bevorzugt 99,9 : 0,1 bis 35 : 65.

In einer neunten bevorzugten Ausführungsform enthält die Formmasse als Polyamide PA814 und PA12 im Gewichtsverhältnis 100 : 0 bis 20 : 80, bevorzugt 100 : 0 bis 25 : 75, besonders bevorzugt 100 : 0 bis 30 : 70 und insbesondere bevorzugt 99,9 : 0,1 bis 35 : 65.

In einer zehnten bevorzugten Ausführungsform enthält die Formmasse als Polyamide PA 1014 und PA11 im Gewichtsverhältnis 100 : 0 bis 20 : 80, bevorzugt 100 : 0 bis 25 : 75, besonders bevorzugt 100 : 0 bis 30 : 70 und insbesondere bevorzugt 99,9 : 0,1 bis 35 : 65.

In einer elften bevorzugten Ausführungsform enthält die Formmasse als Polyamide PA1014 und PA 12 im Gewichtsverhältnis 100 : 0 bis 20 : 80, bevorzugt 100 : 0 bis 25 : 75, besonders bevorzugt 100 : 0 bis 30 : 70 und insbesondere bevorzugt 99,9 : 0,1 bis 35 : 65.

In einer zwölften bevorzugten Ausführungsform enthält die Formmasse als Polyamide PA618 und PA12 im Gewichtsverhältnis 100 : 0 bis 20 : 80, bevorzugt 100 : 0 bis 25 : 75, besonders bevorzugt 100 : 0 bis 30 : 70 und insbesondere bevorzugt 99,9 : 0,1 bis 35 : 65.

In einer dreizehnten bevorzugten Ausführungsform enthält die Formmasse als Polyamide PA11 und PA12 im Gewichtsverhältnis 80 : 20 bis 20 : 80, bevorzugt 75 : 25 bis 25 : 75, besonders bevorzugt 30 : 70 bis 70 : 30 und insbesondere bevorzugt 35 : 65 bis 65 : 35.

Eine vierzehnte bevorzugte Ausführungsform ist eine Kombination der ersten und der dritten Ausführungsform; das PA1012 ist hierbei ersetzt durch eine Mischung von PA1012 und PA1212 im Gewichtsverhältnis 99,9 : 0,1 bis 0,1 : 99,9, bevorzugt 95 : 5 bis 5 : 95 und besonders bevorzugt 90 : 10 bis 10 : 90.

Eine fünfzehnte bevorzugte Ausführungsform ist eine Kombination der zweiten und der vierten Ausführungsform; auch hier ist das PA1012 ersetzt durch eine Mischung von PA1012 und PA1212 im Gewichtsverhältnis 99,9 : 0,1 bis 0,1 : 99,9, bevorzugt 95 : 5 bis 5 : 95 und besonders bevorzugt 90 : 10 bis 10 : 90.

Eine sechzehnte bevorzugte Ausführungsform geht von der dreizehnten Ausführungsform aus; hier werden PA11 und/oder PA12 zu 0,1 bis 99,9 Gew.-%, bevorzugt zu 5 bis 95 Gew.-% und besonders bevorzugt zu 10 bis 90 Gew.-% durch PA1012, PA1212, PA1210, PA814, PA1014 und/oder PA618 ersetzt.

Diese und weitere Ausführungsformen können beliebig miteinander kombiniert werden.

PA11 wird durch Polykondensation von ω-Aminoundecansäure hergestellt, während PA12 durch ringöffnende Polymerisation von Laurinlactam erhalten wird. Beide Polymere sind in einer Vielzahl von Typen im Handel erhältlich. PA1012 wird durch Polykondensation einer äquivalenten Mischung aus 1,10-Decandiamin und 1,12-Dodecandisäure hergestellt, während PA1212 auf gleiche Weise aus 1,12-Dodecandiamin und 1,12-Dodecandisäure erhalten wird. Analog stellt man PA1210 durch Polykondensation äquimolarer Mischungen von 1,12-Dodecandiamin und Sebacinsäure sowie PA618 durch Polykondensation äquimolarer Mischungen von Hexamethylendiamin und 1,18-Octadecandisäure her. PA814 wird entsprechend aus Octamethylendiamin und 1,14-Tetradecandisäure und PA1014 aus 1,10-Decandiamin und 1,14-Tetradecandisäure erhalten. Die Polykondensation wird normalerweise in der Schmelze durchgeführt.

Die eingesetzten Formmassen können maximal etwa 50 Gew.-% Zusatzstoffe enthalten, die ausgewählt sind aus schlagzähmachendem Kautschuk und/oder üblichen Hilfs- bzw. Zuschlagstoffen.

Schlagzähmachende Kautschuke für Polyamidformmassen sind Stand der Technik. Sie enthalten funktionelle Gruppen, die von ungesättigten funktionellen Verbindungen herrühren, die entweder in die Hauptkette einpolymerisiert oder auf die Hauptkette aufgepfropft wurden. Am gebräuchlichsten sind EPM- oder EPDM-Kautschuk, der mit Maleinsäureanhydrid radikalisch gepfropft wurde. Darüber hinaus sind Copolymere bzw. Terpolymere aus Ethylen, Acrylsäureestern und Maleinsäureanhydrid bzw. aus Ethylen und Glycidylacrylat oder Glycidylmethacrylat sowie anhydridfunktionalisierte, ggf. hydrierte Styrol-Butadien-Blockcopolymere gebräuchlich. Derartige Kautschuke können auch zusammen mit einem unfunktionalisierten Polyolefin wie z. B. isotaktischem Polypropylen eingesetzt werden, wie in der EP-A-0 683 210 beschrieben.

Daneben können die Formmassen noch kleinere Mengen von Hilfs- bzw. Zuschlagstoffen enthalten, die zum Einstellen bestimmter Eigenschaften benötigt werden. Beispiele hierfür sind Weichmacher, Pigmente bzw. Füllstoffe wie Ruß, Titandioxid, Zinksulfid, Silikate oder Carbonate, Verarbeitungshilfsmittel wie Wachse, Zinkstearat oder Calciumstearat, Flammschutzmittel wie Magnesiumhydroxid, Aluminiumhydroxid oder Melamincyanurat, Glasfasern, Antioxidantien, UV-Stabilisatoren sowie Zusätze, die dem Produkt antielektrostatische Eigenschaften oder eine elektrische Leitfähigkeit verleihen wie z. B. Kohlenstofffasern, Graphitfibrillen, Fasern aus rostfreiem Stahl bzw. Leitfähigkeitsruß.

In einer möglichen Ausführungsform enthalten die Formmassen 1 bis 25 Gew.-% Weichmacher, besonders bevorzugt 2 bis 20 Gew.-% und insbesondere bevorzugt 3 bis 15 Gew.-%.

Weichmacher und ihr Einsatz bei Polyamiden sind bekannt. Eine allgemeine Übersicht über Weichmacher, die für Polyamide geeignet sind, kann Gächter/Müller, Kunststoffadditive, C. Hanser Verlag, 2. Ausgabe, S. 296 entnommen werden. Als Weichmacher geeignete, übliche Verbindungen sind z. B. Ester der p-Hydroxybenzoesäure mit 2 bis 20 C-Atomen in der Alkoholkomponente oder Amide von Arylsulfonsäuren mit 2 bis 12 C-Atomen in der Aminkomponente, bevorzugt Amide der Benzolsulfonsäure.
Als Weichmacher kommen u. a. p-Hydroxybenzoesäureethylester, p-Hydroxybenzoesäureoctylester, p-Hydroxybenzoesäure-i-hexadecylester, Toluolsulfonsäure-n-octylamid, Benzolsulfonsäure-n-butylamid oder Benzolsulfonsäure-2-ethylhexylamid infrage.

Beim anspruchsgemäßen Verbinden zweier Formteile kann es sich um das Verbinden zweier Formteile jeglicher Art handeln, wie Gehäuseteile, Rohre, rohrähnliche Werkstücke, Verschlüsse, Ventile und Armaturen jeder Art.

Das Fügen geschieht mit Hilfe eines beliebigen Schweißverfahrens; beispielhaft seien das Heizelementstumpfschweißen, das Heizelementmuffenschweißen, das Heizwendelschweißen, das Vibrationsschweißen, das Ultraschallschweißen, das Laserschweißen, die unterschiedlichen Warmgasschweißverfahren (Warmgas-Fächelschweißen, Warmgas-Ziehschweißen, Warmgas-Überlappschweißen und Warmgas-Extrusionsschweißen) und das Rotationsschweißen genannt. Bei den üblichen Schweißverfahren wird in der Regel ein Verbindungselement aus der anspruchsgemäßen Formmasse eingesetzt. Darüber hinaus kann das Verbindungselement in situ ausgeformt werden, beispielsweise durch Mehrkomponentenspritzgießen.

Beim Heizelementstumpfschweißen werden die Werkstücke an den Stoßflächen mit einem Heizelement oder mehreren Heizelementen erwärmt und unter der Anwendung von Kraft ohne oder mit Schweißzusatz geschweißt. Befinden sich die Stoßflächen nicht im direkten Kontakt mit dem Heizelement (Strahler), spricht man vom indirekten Heizelementstumpfschweißen.

Beim Heizwendelschweißen werden die Werkstücke an den Stoßflächen durch eine Heizwendel, die in der Schweißverbindung verbleibt, erwärmt. Die Fügekräfte entstehen durch Wärmedehnung der Werkstücke oder werden von außen aufgebracht.

Beim Heizelementmuffenschweißen werden die Werkstücke an den Stoßflächen mit einem beheizbaren Dornelement bzw. einer Buchse erwärmt und anschließend ineinandergeschoben. Notwendige Fügekräfte können über den Presssitz der Werkstücke aufgebracht werden.
Beim Warmgasschweißen werden die Werkstücke an den Stoßflächen mit warmem Gas erwärmt und unter Anwendung von Kraft mit oder ohne Schweißzusatz geschweißt. Die Fügekräfte werden von Hand oder mechanisch aufgebracht.

Das Vibrationsschweißen ist ein Reibschweißverfahren, bei dem die Energie zum Aufschmelzen und Schweißen der Fügeteile durch eine oszillierende Reibrelativbewegung zwischen den Fügepartnern unter Einwirkung eines ausreichend hohen Reibdrucks erzeugt wird. Die durch die Reibungserwärmung plastifizierten Fügeflächen werden nach Abschalten der Reibbewegung ausgerichtet und unter einem definierten Druck miteinander geschweißt.

Beim Ultraschallschweißen werden longitudinale Schwingungen von der Sonotrode der Schweißmaschine auf die Fügeteile übertragen, wobei ein stehendes Wellenbild in den Fügeteilen erzeugt wird. In Zonen maximaler Wechseldehnungen bzw. -spannungen schmilzt der Kunststoff infolge intermolekularer Reibung auf.

Das Laserschweißen kann entweder in Form des Laserstumpfschweißens oder des Laserdurchstrahlschweißens durchgeführt werden. Das Laserstumpfschweißen ist dem kontaktlosen Heizelementschweißen vom Verfahrensablauf her gleich. Beim Laserdurchstrahlschweißen werden thermoplastische Fügeteile mit unterschiedlichen Absorptionseigenschaften geschweißt. Die Fügeteile werden vor der Schweißung in Kontakt gebracht, der Laserstrahl durchdringt das für ihn transparente Fügeteil und wird vom anderen Fügeteil, das in der Regel mit Zusatzstoffen modifiziert ist, absorbiert, wobei die Fügezone plastifiziert wird.

Beim Rotationsschweißen (Reibschweißen) werden die Werkstücke an den Stoßflächen durch

Reibung erwärmt und unter Anwendung von Kraft mit oder ohne ohne Schweißzusatz geschweißt. Die Wärme kann durch Relativbewegung der Werkstücke zueinander oder von einem Reibelement erzeugt werden. Die Kraft wird von Hand oder mechanisch aufgebracht.

Im Übrigen sei hinsichtlich der Schweißverfahren auf die DIN 1910 Teil 3 verwiesen.

Im Rahmen der Erfindung können nicht nur die Verbindungselemente (z. B. Muffenfitting vom Heizelementmuffenschweißen oder die Heizwendelmuffe vom Heizwendelschweißen), sondern auch die Schweißzusätze aus den anspruchsgemäßen Polyamidformmassen bei einigen der oben beschriebenen Schweißverfahren, insbesondere beim Warmgasschweißen, für eine geeignete Fügeverbindung sorgen. Das Verbindungselement wird dann in situ aus dem Schweißzusatz erzeugt.

Das Mehrkomponentenspritzgießen wird vorteilhaft so durchgeführt, dass die vorgeformten Fügeteile in einer Form platziert und durch Einspritzen einer Schmelze der Verbindungselement-Formmasse miteinander verbunden werden, wobei das Verbindungselement angeformt wird. Eine geeignete Verfahrensvariante ist beispielsweise das Die Slide Injection Molding.

Alle diese Fügeverfahren sind dem Fachmann bekannt, so dass nähere Ausführungen hierzu überflüssig sind.

In den folgenden Beispielen werden die Verbundhaftkräfte verschiedener Polyamidkombinationen miteinander verglichen.

Zur Beurteilung der möglichen Verbundhaftung der Formmassen wurden Schweißversuche mittels Heizelementstumpfschweißen durchgeführt, da das Heizelementstumpfschweißen ein einfaches und gängiges Verfahren ist. Es ist von großer Bedeutung für das Fügen von Tafeln und Rohren sowie spritzgegossenen Serienartikeln, wie Gehäusen und Behältern aus thermoplastischen Kunststoffen. Die Schweißversuche erfolgten in Anlehnung an die Richtlinie DVS 2207.

Die zu verbindenden Platten wurden zunächst gespannt. Das Heizelement wurde zwischen die Fügeflächen gefahren, so dass die Flächen in direktem Kontakt zum Heizelement standen. Ein Wärmestrom vom Heizelement in die Fügeteile führte zum Aufschmelzen der Schweißzone. Dieses Aufschmelzen, Erwärmungsphase genannt, setzte sich zusammen aus einem Angleichvorgang unter Druck und der drucklosen Erwärmung.

Die Zeit, in der das Heizelement entfernt und die beiden Schlitten zusammengefahren werden, bis sich die Fügeteile berühren, wird Umstellzeit genannt. Dabei wurden die Flächen der Umgebungstemperatur ausgesetzt und kühlten ab. Beim Fügen erfolgte unter Fügedruck ein Quetschfließen der Schmelze. Dabei floss die Schmelze in den Wulst.

Bei den Versuchen wurde je nach Schmelzpunkt der Formmasse die Zeit der drucklosen Erwärmung variiert. Das bedeutet konkret, dass Formteile mit einem höheren Schmelzpunkt länger erwärmt wurden als die mit einem geringeren Schmelzpunkt, bevor die Formteile gegeneinander gefügt wurden.

Das Schweißen wurde durch das Abkühlen unter dem Fügedruck beendet. Der Fügedruck blieb während der ganzen Abkühlphase konstant. Nach dem Abkühlvorgang wurden die Teile entnommen.

Aus den Platten wurden senkrecht zur Fügefläche Streifen geschnitten. Die Streifen wurden dann in Anlehnung an die Richtlinie DVS 2203 im Kurzzeitzugversuch geprüft und die Haftkräfte ermittelt.
Referenz 1: Kombination PA11/PA11; Verbundhaftkraft 34 MPa
Referenz 2: Kombination PA12/PA12; Verbundhaftkraft 35 MPa
Vergleichsbeispiel 1: Kombination PA11/PA12; Verbundhaftkraft 9 MPa
Beispiel 1: Kombination PA11/PA1012; Verbundhaftkraft 27 MPa
Beispiel 2: Kombination PA11/PA1212, Verbundhaftkraft 30 MPa
Beispiel 3: Kombination PA12/PA1012; Verbundhaftkraft 40 MPa
Beispiel 4: Kombination PA12/PA1212; Verbundhaftkraft 36 MPa
Beispiel 5: Kombination PA11/PA1210; Verbundhaftkraft 27 MPa
Beispiel 6: Kombination PA12/PA1210; Verbundhaftkraft 32 MPa
Beispiel 7: Kombination PA11/PA618; Verbundhaftkraft 24 MPa
Beispiel 8: Kombination PA12/PA618; Verbundhaftkraft 31 MPa

Diese hier anhand von Zweierverbunden gewonnenen Erkenntnisse sind in vollem Umfang auf die entsprechenden Dreierverbunde übertragbar.

## Patentansprüche

1. Verwendung einer Formmasse zum Fügen zweier Formteile aus jeweils einer PA11-und einer PA12-Formmasse, wobei die Formmasse zu mindestens 50 Gew.% eine Polyamidkomponente enthält und die Polyamidkomponente so gewählt wird, dass sie herstellbar ist aus linearen aliphatischen Diaminen und Dicarbonsäuren bzw. Lactamen oder ω-Aminocarbonsäuren, wobei in den wiederkehrenden Einheiten pro Carbonamidgruppe 11 bis 12 Kohlenstoffatome vorhanden sind und wobei weiterhin diese Polyamidkomponente zu maximal 80 Gew.-% jeweils eines der Polyamide PA11 und PA12 enthält.

2. Verwendung gemäß Anspruch 1,
**dadurch gekennzeichnet,**
**dass** die Polyamidkomponente ausgewählt ist aus PA1012, PA1210, PA1212, PA814, PA1014, PA618, PA11 und PA12.

3. Verwendung gemäß einem der Ansprüche 1 und 2,
**dadurch gekennzeichnet,**
**dass** das Fügen mit Hilfe eines Schweißverfahrens erfolgt.

4. Verwendung gemäß Anspruch 3,
**dadurch gekennzeichnet,**
**dass** ein Verbindungselement aus der zum Fügen verwendeten Formmasse eingesetzt wird.

5. Verwendung gemäß einem der Ansprüche 1 und 2,
**dadurch gekennzeichnet,**
**dass** das Fügen mittels Mehrkomponentenspritzgießen erfolgt.

6. Verbundteil, das gemäß einem der Ansprüche 1 bis 5 erhalten wird.

## Claims

1. The use of a moulding compound for joining two mouldings each made of a PA11 and a PA12 moulding compound, the moulding compound containing at least 50% by weight of a polyamide component and the polyamide component being so chosen that it is preparable from linear aliphatic diamines and dicarboxylic acids and/or lactams or ω-aminocarboxylic acids, there being 11 to 12 carbon atoms present per carboxamide group in the repeating units, and, furthermore, this polyamide component containing not more than 80% by weight of either one of the polyamides PA11 and PA12.

2. The use according to claim 1, **characterized in that** the polyamide component is selected from PA1012, PA1210, PA1212, PA814, PA1014, PA618, PA11 and PA12.

3. The use according to either of claims 1 and 2, **characterized in that** joining takes place by means of a welding technique.

4. The use according to claim 3, **characterized in that** a bonding element made from the moulding compound used for joining is employed.

5. The use according to either of claims 1 and 2, **characterized in that** joining takes place by means of multi-component injection moulding.

6. A bonded component obtained according to any one of claims 1 to 5.

## Revendications

1. Utilisation d'un matériau de moulage pour l'assemblage de deux pièces moulées constituées respectivement d'un matériau de moulage PA11 et PA12, le matériau de moulage contenant au moins 50 % en poids d'un composant polyamide et le composant polyamide étant choisi de manière à pouvoir être fabriqué à partir de diamines aliphatiques linéaires et d'acides dicarboxyliques ou de lactames ou d'acides ω̅-̅aminocarboxyliques, 11 à 12 atomes de carbone étant présents dans les unités de répétition par groupe carbonamide et ce composant polyamide contenant au plus 80 % en poids respectivement d'un des polyamides PA11 et PA12.

2. Utilisation selon la revendication 1, **caractérisée en ce que** le composant polyamide est choisi parmi PA1012, PA1210, PA1212, PA814, PA1014, PA618, PA11 et PA12.

3. Utilisation selon l'une quelconque des revendications 1 et 2, **caractérisée en ce que** l'assemblage a lieu à l'aide d'un procédé de soudage.

4. Utilisation selon la revendication 3, **caractérisée en ce qu'**un élément de liaison constitué du matériau de moulage utilisé pour l'assemblage est utilisé.

5. Utilisation selon l'une quelconque des revendications 1 et 2, **caractérisée en ce que** l'assemblage a lieu par moulage par injection multi-composant.

6. Pièce composite, qui est obtenue selon l'une quelconque des revendications 1 à 5.
